(19) Europäisches Patentamt / European Patent Office / Office européen des brevets

(11) **EP 1 839 745 A1**

(12) **EUROPEAN PATENT APPLICATION**
published in accordance with Art. 158(3) EPC

(43) Date of publication:
03.10.2007 Bulletin 2007/40

(51) Int Cl.:
*B01J 23/63* (2006.01)  *B01D 53/94* (2006.01)
*B01J 23/58* (2006.01)  *B01J 23/656* (2006.01)
*B01J 23/89* (2006.01)  *B01J 37/16* (2006.01)

(21) Application number: 05800417.7

(22) Date of filing: 31.10.2005

(86) International application number:
PCT/JP2005/019992

(87) International publication number:
WO 2006/067912 (29.06.2006 Gazette 2006/26)

(84) Designated Contracting States:
DE FR GB

(30) Priority: 22.12.2004 JP 2004372185
28.01.2005 JP 2005021427

(71) Applicant: Nissan Motor Company Limited
Kanagawa-ku
Yokohama-shi, Kanagawa 221-0023 (JP)

(72) Inventors:
• NAKAMURA, Masanori
c/o IP Dept of NISSAN MOTOR CO., LTD
Kanagawa 243-0192 (JP)
• SUGA, Katsuo
c/o IP Dept of NISSAN MOTOR CO., LTD
Kanagawa 243-0192 (JP)

• WAKAMATSU, Hironori
c/o IP Dept of NISSAN MOTOR CO., LTD
Kanagawa 243-0192 (JP)
• SHIRATORI, Kazuyuki
c/o IP Dept of NISSAN MOTOR CO., LTD
Kanagawa 243-0192 (JP)
• YASUDA, Hirofumi
c/o IP Dept of NISSAN MOTOR CO., LTD
Kanagawa 243-0192 (JP)
• AOYAMA, Makoto
c/o IP Dept of NISSAN MOTOR CO., LTD
Kanagawa 243-0192 (JP)

(74) Representative: Grünecker, Kinkeldey,
Stockmair & Schwanhäusser
Anwaltssozietät
Maximilianstrasse 58
80538 München (DE)

(54) **EXHAUST GAS PURIFICATION CATALYST, AND METHOD FOR PRODUCING EXHAUST GAS PURIFICATION CATALYST**

(57) An exhaust gas purifying catalyst 1 has a composite compound 2 in which a metal selected from among Al, Ce, La, Zr, Co, Mn, Fe, Mg, Ba and Ti is uniformly dispersed on an oxide selected from among $Al_2O_3$, $ZrO_2$ and $CeO_2$, and a precious metal 4 selected from among Pt, Pd and Rh, supported on a compound 3 of the metal, and covered with the composite compound 2.

**FIG. 1**

EP 1 839 745 A1

**Description**

TECHNICAL FIELD

The present invention relates to an exhaust gas purifying catalyst and a method of producing an exhaust gas purifying catalyst, and particularly relates to an exhaust gas purifying catalyst for purifying exhaust gas emitted from an internal combustion engine.

BACKGROUND ART

Since automobile emission restrictions have globalized, a three-way catalyst where a support such as $Al_2O_3$ (alumina) which is a porous carrier supports precious metal particles such as Pt (platinum), Pd (palladium), and Rh (rhodium) is used for the purpose of purify HC (hydrocarbon), CO (carbon monoxide), and $NO_X$ (nitrogen oxide) in exhaust gas.

Catalyst activity of the precious metal is almost in proportion to a surface area of the precious metal because a reaction using a precious metal is a contact reaction where the reaction progresses on the surface of the precious metal. Therefore, in order to obtain as much catalyst activity as possible from a small amount of precious metal, it is preferred to fabricate precious metal particles with a small particle size and a large specific surface area, and to disperse the particles uniformly onto a support while maintaining the particle size.

However, since precious metal particles with a particle size of under 10 nm has high catalyst activity but high surface reactivity and high surface energy, it the particles are very unstable. Also, when a particle size of precious metal particles becomes smaller than 5 nm, a melting point thereof is suddenly decreased (Reference: J. Phys. Chem. B, 107, pp2719-2724 (2003)). Therefore, the precious metal particles move closer to each other and sinter together more easily. In particular, Pt sinters remarkably when heated, and even if Pt is dispersed uniformly on a support, Pt sinters due to heating and the particle size thereof increases. Hence, due to sintering of Pt caused by heating, a function of Pt as a catalyst, or conversion rate which is an indicator for purifying $NO_X$ is reduced. Because a catalyst for an automobile is usually exposed to high temperature of between 800 and 900 °C, in some cases over 1000 °C, it is difficult to prevent sintering of precious metal particles with a small particle size, maintain a particle size when fabricated, and maintain catalyst activity.

Meanwhile, in order to prevent precious metal particles from sintering, it is considered to reduce surface energy of the precious metal particles. However, to reduce the surface energy, it is necessary to have precious metal particles with a large particle size of approximately 50 to 100 nm, and in the case of such particle size, catalyst activity itself may be lost. Conventionally, in an above-described exhaust gas purifying catalyst using a precious metal, ceria was supported on alumina, a support, and further, a precious metal such as platinum was supported. In this exhaust gas purifying catalyst, platinum supported by ceria is sintered due to heat durability test. In the exhaust gas purifying catalyst after heat durability test, coarsened platinum is supported on ceria that is supported on alumina. In this case, since platinum is sintered and has a large particle size, catalyst activity is reduced. As just described, in a conventional exhaust gas purifying catalyst, even if a particle size of platinum is small, the particle size is not maintained when the catalyst is fabricated, and it is difficult to maintain catalyst activity.

Therefore, in Japanese Patent Laid-Open Publication No. H10-216517, an exhaust gas purifying catalyst is proposed where a catalyst active particle is supported on a support, and a material which is the same as or different from the support is adhered to the surface of the support.

DISCLOSURE OF INVENTION

However, even with the technology disclosed in the above patent document, sintering of catalyst active particles cannot be prevented sufficiently.

The present invention has been devised to solve such problems, and according to a first aspect of the invention, in summary, an exhaust gas purifying catalyst, comprises a composite compound in which a metal selected from among Al, Ce, La, Zr, Co, Mn, Fe, Mg, Ba and Ti is uniformly dispersed on an oxide selected from among $Al_2O_3$, $ZrO_2$, and $CeO_2$, and a precious metal selected from among Pt, Pd and Rh, supported on a compound of the metal, and covered with the composite compound.

Moreover, according to a second aspect of the invention, in summary, a method of producing an exhaust gas purifying catalyst, comprises the steps of preparing a dispersion system in which a second metal is uniformly dispersed on an oxide of a first metal, depositing a precious metal selectively on the second metal by introducing precious metal salt to the dispersion system and by adding a reducing agent, covering the precious metal deposited on the second metal with a mixture of salt of the first metal and salt of the second metal, and baking the dispersion system in which the precious metal is covered with the mixture.

BRIEF DESCRIPTION OF THE DRAWINGS

FIG. 1 is an explanatory view showing a state of an exhaust gas purifying catalyst according to the present invention in an oxidizing atmosphere.

FIG. 2(a) is an explanatory view showing a state of an exhaust gas purifying catalyst in a reducing atmosphere. FIG 2(b) is an explanatory view showing a state of the exhaust gas purifying catalyst in an oxidizing atmosphere.

FIG. 2(c) is an explanatory view showing a state of the exhaust gas purifying catalyst in an oxidizing atmosphere.

FIG. 2(d) is an explanatory view showing a state of an exhaust gas purifying catalyst in an oxidizing atmosphere.

FIG. 3(a) is a HAADF-STEM image of an exhaust gas purifying catalyst obtained in Embodiment example 2 in an oxidizing atmosphere. Fig. 3(b) is a HAADF-STEM image showing a state of an exhaust gas purifying catalyst obtained in Comparative example 1 after a durability test.

FIG. 4 is an explanatory view showing a relation between Ce count and Pt count of a baked sample obtained in Embodiment example 2 to Embodiment example 4.

FIG. 5 is an explanatory view showing a relation between a Pt supporting concentration and a Pt particle size after a durability test.

FIG. 6 is a view showing a relation between a particle size and a melting point of a precious metal.

FIG. 7 is an explanatory view showing a relation between a particle size and conversion rate of platinum.

BEST MODE FOR CARRYING OUT THE INVENTION

Details of an exhaust gas purifying catalyst according to the present invention, and a method of producing the exhaust gas purifying catalyst are described based on an embodiment.

(Exhaust gas purifying catalyst)

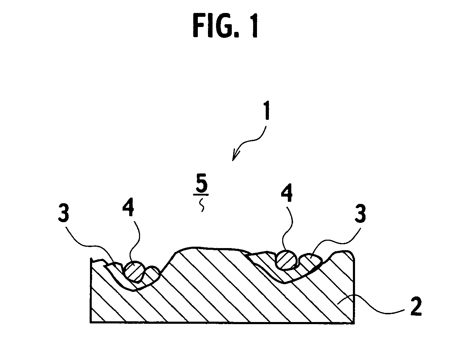

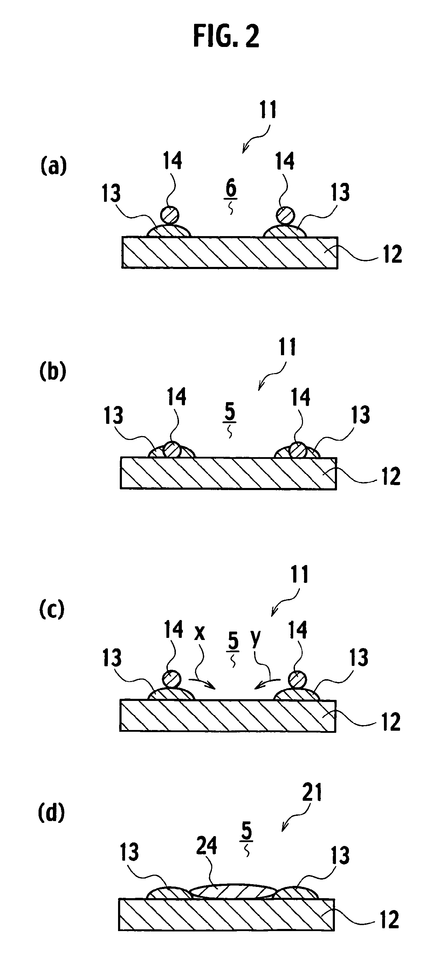

An embodiment of an exhaust gas purifying catalyst according to the present invention is described. FIG. 1 is an explanatory view showing a state of an exhaust gas purifying catalyst 1 according to the present invention in an oxidizing atmosphere. FIG. 2(a) is an explanatory view showing a state of an exhaust gas purifying catalyst 11 in a reducing atmosphere. FIG. 2(b) is an explanatory view showing a state of the exhaust gas purifying catalyst 11 in an oxidizing atmosphere. FIG. 2(c) is an explanatory view showing a state of the exhaust gas purifying catalyst 11 in an oxidizing atmosphere. FIG. 2(d) is an explanatory view showing a state of an exhaust gas purifying catalyst 21 in an oxidizing atmosphere.

As shown in FIG. 1, the exhaust gas purifying catalyst 1 according to the embodiment is characterized by including a composite compound 2 in which a metal selected from among A1 (aluminum), Ce (cerium), La (lanthanum), Zr (zirconium), Co (cobalt), Mn (manganese), Fe (iron), Mg (magnesium), Ba (barium), and Ti (titanium) is dispersed uniformly on an oxide selected from among $Al_2O_3$ (alumina), $ZrO_2$ (zirconium oxide), and $CeO_2$ (Ceria), and a precious metal 4 selected from among Pt (platinum), Pd (palladium), and Rh (rhodium), supported on a compound of the metal 3 and covered with the composite compound 2.

FIG. 2(a) shows a state of an exhaust gas purifying catalyst 11 in which $CeO_2$ 13 is supported on $Al_2O_3$ 12 which is a support, and, on top of that, Pt 14 is further supported, in a reducing atmosphere 6. Pt has a property that it is sintered in an oxidizing atmosphere, and is not sintered in a reducing atmosphere. Therefore, as shown in FIG. 2(a), in a reducing atmosphere, Pt 14 is present on $CeO_2$ 13 instead of sintering. Next, FIG. 2(b) shows a state of the exhaust gas purifying catalyst 11 in an oxidizing atmosphere 5. In the oxidizing atmosphere 5, Pt 14 is dissolved in $CeO_2$ 13. Pt is sintered in an oxidizing atmosphere, but in this exhaust gas purifying catalyst 11, since Pt 14 is dissolved in $CeO_2$ 13 and covered with $CeO_2$ 13, sintering of Pt 14 is suppressed even in an oxidizing atmosphere. Here, when the oxidizing atmosphere is changed to a reducing atmosphere, the dissolved state of Pt 14 in $CeO_2$ 13 is released and Pt 14 is exposed on the surface of $CeO_2$ 13 as shown in FIG. 2(a).

Here, by repeating the states of FIG. 2(a) and FIG. 2(b), sintering of Pt 14 can be suppressed, however, if Pt 14 which has been released from the dissolved state in an oxidizing atmosphere is dissolved in $CeO_2$ 13 slower than the sintering of Pt, the atmosphere may be changed back to the oxidizing atmosphere 5 while Pt 14 is still released from the dissolved state. In this case, as shown in FIG. 2(c), Pt 14 which is exposed in $CeO_2$ 13 in the reducing atmosphere 6 and remained without being able to be dissolved in $CeO_2$ 13 in the oxidizing atmosphere 5 moves in the directions of arrows x and y, sinters on $CeO_2$ 13 in the oxidizing atmosphere 5 and forms a coarse particle 24 of Pt as shown in FIG. 2(d). In this case, since a contact between $CeO_2$ 13 and the coarse particle 24 may be reduced, and a contact ratio of the coarse particle 24 of a precious metal and reactant gas may be reduced, the catalyst performance is lowered. As just described, when a speed at which Pt 14 is dissolved again in $CeO_2$ 13 is slower than sintering speed of Pt, Pt 4 released from the dissolved state in a reducing atmosphere 6 and exposed on $CeO_2$ 13 is sintered before being dissolved in $CeO_2$ 13 in the oxidizing atmosphere 5.

Therefore, in the exhaust gas purifying catalyst 1 according to the present embodiment, as shown in FIG. 1, the surface area of the precious metal 4 supported on the metal compound 3 is partially covered with the composite compound 2 so that sintering hardly occurs even if the atmosphere returns to an oxidizing atmosphere slowly. In this exhaust gas purifying catalyst 1, the precious metal 4 is dissolved in the composite compound 2 while in the oxidizing atmosphere 5, and, because the precious metal 4 is covered with the composite compound 2 in the oxidizing atmosphere 6, sintering of the precious metal 4 can be prevented even in a case where a speed of the precious metal 4 being dissolved in the composite compound 2 is slow. As just described above, by allowing the metal compound 3 to support the precious metal 4 and covering the precious metal 4 with the composite compound 2, a reduction of a dispersion rate of the precious metal 4 is suppressed, and a state of a small particle size of the precious metal 4 can be maintained. Therefore, it becomes possible to obtain an exhaust gas purifying catalyst having excellent heat durability with a small amount of precious metal.

Behaviors of Pt, Pd and Rh used as a precious metal are different in an oxidizing atmosphere and a reducing atmosphere, respectively. As described earlier, Pt sinters in an oxidizing atmosphere and does not sinter in a reducing atmosphere. Pd does not sinter in an oxidizing atmosphere and sinters in a reducing atmosphere. Rh does not sinter in an oxidizing atmosphere and sinter in a reducing atmosphere. Therefore, in a case where Pt is used, a metal in which Pt is dissolved in an oxidizing atmosphere is combined with Pt, and the precious metal is covered with a composite compound containing the metal. In a case where Pd or Rh is used, it is preferred to combine Pd or Rh with an element which is basically dissolved in a reducing atmosphere and maintains catalyst performance by being dissolved. For example, it is preferred to use Al for Rh. In particular, when Pt is used as a precious metal, it is preferred that $CeO_2$ is used as a metal compound and $Al_2O_3$ is used as an oxide, in other words, a combination of $Pt/CeO_2/Al_2O_3$ is preferred. In the case of Rh, a combination of $Rh/Al_2O_3/ZrO_2$ is preferred, and in the case of Pd, a combination of $Pd/Al_2O_3/Al_2O_3$ is preferred. Also, when combining other element with a metal compound, for example, Ce-Zr-Ox, a dissolving speed of a precious metal is increased, and therefore sintering can be suppressed further. Note that, in FIG. 1, for example, the metal compound 3 may be a compound having the same physical properties as the composite compound 2, and may be a compound having different physical properties of the same.

In the exhaust gas purifying catalyst of this embodiment, it is preferred that a precious metal is covered with the aforementioned composite compound in a range of 10 to 80% of the surface area of the precious metal. Normally, what functions effectively as a catalyst is a precious metal present on a catalyst surface. Therefore, when a percentage of covered precious metal is high, in other words, when the coverage ratio is high, the precious metal is stabilized, and a sintering suppressive ability is high, but because the precious metal cannot have sufficient contact with a reactant, sufficient catalytic activity cannot be obtained. On the other hand, when the coverage ratio of a precious metal is low, the initial activity of a catalyst is high, but since a precious metal supported on a support surface is sintered due to heating, durability is poor. Therefore, considering the balance of a sintering suppressive ability and catalyst performance, it is preferred that a precious metal is covered in a range of 10 to 80% of the surface area thereof. When the coverage ratio is in this range, sintering of a precious metal is suppressed, and an exhaust gas purifying catalyst having durability is obtained.

Here, how to calculate the coverage ratio is described. The coverage ratio is obtained as (100 - exposure ratio) %. The exposure ratio is, as shown below, calculated from a ratio between a precious metal outer surface area (PMSA) calculated by a later-described CO (carbon monoxide) adsorption, and a theoretical particle surface area (TSA) to be calculated from particle sizes resultant from a transmission electron microscope (TEM) observation, and represents a ratio of a precious metal exposed on a surface of a composite compound out of a precious metal present in an exhaust gas purifying catalyst. With TEM, a precious metal which is not exposed on a surface of a composite compound can be observed. Therefore, if a precious metal is entirely exposed on a surface of a composite compound, an amount of gas adsorbed stoichiometrically in TSA is obtained, and TSA and PMSA become the same value. However, when a precious metal is supported on a composite compound surface while being covered, an amount of gas adsorbed stoichiometrically in the precious metal surface area obtained from a particle size of the precious metal cannot be obtained. Therefore, from the particle size of the precious metal observed with TEM and an amount of gas actually adsorbed in a sample, a ratio of the precious metal surface area exposed on the composite compound surface is calculated and used as exposure ratio.

PMSA is calculated from an expression (1) stated below.

[Math 1]

$$PMSA(m^2/g) = \frac{\text{Unit CO adsorption} \times 6.02 \times 10^{23} \times \text{Atomic cross section} \times 10^{18}}{22414 \times \text{Stoichiometrical ratio}} \quad ...(1)$$

*Unit CO adsorption $(cm^3/g)$ = total adsorption/sample weight

The TSA is calculated by expressions(2) to (4) as follows. [D] is an average particle diameter of precious metal particles observed by the TEM. Letting [A] be the number of atoms of precious metal constituting a single [D], the number (n) of [D]'s contained in the catalyst is calculatable from the number [N] of precious metal atoms brought in during the preparation.

[Math 2]

$$[A] = \frac{\frac{4 \times \pi}{3} \times \left(\frac{[D]}{2}\right)^3}{\frac{4 \times \pi}{3} \times \left(\frac{[\text{constituent atom radius}]}{2}\right)^3} \quad ...(2)$$

[Math 3]

$$[n] = \frac{[N]}{[A]} \quad \cdots \quad (3)$$

[Math 4]

$$TSA = 4 \times \pi \times \left(\frac{[D]}{2}\right)^2 \times [n] \quad \cdots \quad (4)$$

From the ratio between PMSA and TSA obtained above, exposure ratio is calculated.
$$\text{Exposure ratio (\%)} = (PMSA) / (TSA) \times 100 \quad ...(5)$$

Then, as shown in expression (6), coverage ratio is obtained by deducting exposure ratio (%) from 100.
$$\text{Coverage ratio (\%)} = 100 - \text{exposure ratio} \quad \ldots (6)$$

Note that, the following expression (7) is obtained by simplifying the calculation method of expressions (1) to (6) above. From this expression (7), coverage ratio (%) is obtained.

[Math 5]

$$\text{Coverage ratio (\%)} = 100 - 0.895 \times \frac{D \times \alpha \times \beta \times \varepsilon}{\gamma \times \delta} \quad \ldots (7)$$

Wherein

$\alpha$: Unit CO adsorption ($cm^3/g$)
$\beta$: Atomic cross section ($nm^2$)
$\gamma$: Stoichiometrical ratio (-)
$\delta$: Precious metal supporting concentration (wt%)
$\varepsilon$: Supported precious metal concentration (g/ml)
D: TEM-observed particle size (nm)

In the exhaust gas purifying catalyst, it is preferred that the particle size of a metal compound is 10 nm or smaller. For producing an exhaust gas purifying catalyst, a precious metal is selectively deposited on a metal composite dispersed uniformed in the foregoing oxide. In this case, if the particle size of the metal compound contained in the oxide is large, the particle size of a precious metal deposited thereon becomes large as well. Therefore, it is preferred that the particle size of a metal compound uniformly dispersed on the oxide is 10 nm or smaller, and when the particle size is smaller than 10 nm or smaller, the particle size of a precious metal deposited thereon can be 10nm or smaller.

Further, it is preferred that the particle size of a precious metal is 10 nm or smaller after an exhaust gas purifying catalyst is baked for three hours at 900 °C in the air. This is because, when the particle size of a precious metal is larger than 10 nm after three-hour baking at 900 °C in the air, in other words, after undergoing a heat durability test, catalyst performance is reduced. Note that, when the particle size of precious metal is 5 nm or smaller, catalyst performance is improved.

Also, it is preferred that the precious metal is Pt, the metal is Ce, and the oxide is $Al_2O_3$. In this case, Ce reacts with Al, easily forming $Ce-Al_2O_4$ as a composite compound. Then, when Pt is fixed on the surface of $Ce-Al_2O_4$, since $Ce-Al_2O_4$ has high heat durability and stable crystal structure compared with alumina, sintering of Pt can be prevented.

Further, it is preferred that the peak integrated intensity on the Ce (200) surface from X-ray diffraction analysis is larger than the peak integrated intensity on the Ce (111) surface by more than 0.6. The value within this range means that Ce is uniformly dispersed into alumina.

Also, when the precious metal is Pt, the metal is Ce, and the oxide is $Al_2O_3$, it is preferred that a ratio (IA/IB) between a spectral integrated intensity of Pt (IA) obtained from an energy-dispersive X-ray analysis (EDX) and a spectral integrated intensity of Ce (IB) after the exhaust gas purifying catalyst is baked for one hour at 400 °C in the air is 0.005 or larger. In this case, an amount of Pt selectively supported on the composite compound ($Ce-Al_2O_4$) is large.

In this exhaust gas purifying catalyst, it is preferred that a supporting concentration of Pt is 1.0 wt% or smaller. In this case, since an interparticle distance between Pt and other Pt is ensured, sintering of Pt can be prevented. Note that, when a supporting concentration of Pt is increased, Pt present on the composite compound surface without being able to be dissolved therein is sintered. Also, in a case where a supporting concentration of Pt is 0.01 wt% or smaller, when the exhaust gas purifying catalyst is to be applied to a honeycomb support or the like to be used for purifying automobile exhaust gas, a large amount of the exhaust gas purifying catalyst should be applied to the honeycomb support, which is poor in practicality.

As described above, in the exhaust gas purifying catalyst according to the embodiment of the present invention, by providing a composite compound in which a metal selected from among Al, Ce, La, Zr, Co, Mn, Fe, Mg, Ba and Ti is uniformly dispersed on an oxide selected from among $Al_2O_3$, $ZrO_2$, and $CeO_2$, and a precious metal selected from among Pt, Pd, and Rh, supported on a compound of the metal and covered with the composite compound, it becomes possible to obtain an exhaust gas purifying catalyst which suppresses a reduction of the dispersion rate of the precious metal, maintains a state where the particle size of the precious metal is small, and has excellent heat durability with a small amount of precious metal.

(Method of producing Exhaust gas purifying catalyst)

Next, an embodiment of a method of producing an exhaust gas purifying catalyst according to the present invention is described. The method of producing an exhaust gas purifying catalyst according to this embodiment is characterized by comprising the steps of: preparing a dispersion system where a second metal is dispersed uniformly in an oxide of a first metal; depositing a precious metal selectively on the second metal by introducing precious metal salt into the dispersion system and adding a reducing agent; covering the precious metal deposited on the second metal with a mixture of salt of the first metal and salt of the second metal; and baking the dispersion system where the precious metal is covered with the mixture. In this method of producing g an exhaust gas purifying catalyst, alkaline precious metal salt is adsorbed and supported selectively on the surface of a compound of the second metal such as $CeO_2$. In this case, obtained is an exhaust gas purifying catalyst which is provided with a composite compound in which the second metal is uniformly dispersed on an oxide of the first metal, and a precious metal supported on a compound of the second metal and covered with a composite compound, and, in this exhaust gas purifying catalyst, the precious metal does not sinter in an oxidizing atmosphere because the precious metal is dissolved in the composite compound where the second metal is dispersed uniformly in the oxide of the first metal.

Here, as an example, a system of $Pt/Ce/Al_2O_3$, where the precious metal is Pt, the second metal is Ce, and the oxide of the first metal is $Al_2O_3$ is described. On $Ce-Al_2O_3$ where the peak integrated intensity on the Ce (200) surface by X-ray diffraction analysis is larger than the peak integrated intensity of Ce (111) surface by more than 0.6, Pt is selectively deposited on Ce by dinitrodiamine platinum salt as alkaline precious metal salt, and $NaBH_4$ as a reducing agent. Thereafter, the deposited precious metal is covered with Al nitrate and Ce acetate, and dried. By these steps, Pt on $Al_2O_3$ where Ce is uniformly dispersed is covered with a composite compound containing Ce and Al.

As stated above, according to the method of producing an exhaust gas purifying catalyst of this embodiment, since the precious metal can be supported on the first oxide on which the second metal is dispersed uniformly while being covered with the oxide of the first metal which contains the second metal, it becomes possible to obtain an exhaust gas purifying catalyst which suppresses a reduction of the dispersion rate of the precious metal, maintains a state where the particle size of the precious metal is small, has excellent heat durability with a small amount of precious metal.

Note that, in producing the exhaust gas purifying catalyst, a step of preparing a dispersion system in which the second metal is dispersed uniformly in the oxide of the first metal, a step of depositing the precious metal selectively on the second metal by introducing precious metal salt into the dispersion system and adding a reducing agent, a step of covering the precious metal deposited on the second metal with a mixture of salt of the first metal and salt of the second metal, and a step of baking the dispersion system in which the precious metal is covered with the mixture may be incorporated to any preparation method and supported out. The preparation method is, for example, an inclusion method, a reversed micelle method, an impregnation method, or the like.

MODE FOR THE INVENTION

Hereinafter, the exhaust gas purifying catalyst according to the present invention is described more specifically by Embodiment example 1 to Embodiment example 19, Comparative example 1 to Comparative example 3, but the scope of the present invention is not limited thereto. These Embodiment examples are investigations for effectiveness of the exhaust gas purifying catalyst according to the present invention, and represent Embodiment examples of exhaust gas purifying catalysts prepared using different ingredients.

<Preparation of Samples>

(Embodiment example 1) Preparation of powder of Pt 0.3%/$CeO_2$ 20% - $Al_2O_3$

First of all, Ce acetate was introduced to alumina whish is dispersed in water so that $CeO_2$ is 20 wt% to alumina. Thereafter, the sample was agitated for two hours, dried for a day at 120 °C, and then baked for two hours at 600 in the air. After the agitation, the sample was dispersed into water, and tetraammine platinum hydroxide was introduced therein. Then, the sample was agitated for two hours, dried for a day at 120 °C, and then baked for an hour at 400 °C in the air. The sample obtained after baking was dispersed into water, and Ce acetate and Al nitrate were introduced therein. Then, after two-hour agitation, the sample was dried for a day at 120 °C and baked for an hour at 400 °C in the air, and the target sample was obtained.

(Embodiment example 2) Production of Pt 0.3%/$CeO_2$ 20% - $Al_2O_3$

In Embodiment example 2, Ce - $Al_2O_3$ was used as alumina. First of all, $CeO_2$ 20% - $Al_2O_3$, where the peak integrated intensity of the Ce (200) surface was larger than the peak integrated intensity of the Ce (111) surface from X-ray diffraction analysis by more than 0.6, was dispersed in water. In this dispersion fluid, tetraammine platinum hydroxide was introduced. The fluid was agitated for two hours, dried for a day at 120 °C, and then baked for an hour at 400 °C in the air. The sample thus obtained was dispersed in water, and Ce acetate and Al nitrate were introduced therein. Thereafter, the sample was agitated for two hours, dried for a day at 120 °C, and baked for an hour at 400 °C in the air, and the target sample was obtained.

(Embodiment example 3) Production of Pt 0.3%/$CeO_2$ 20% - $Al_2O_3$

In Embodiment example 3, Ce - $Al_2O_3$ was used as alumina. First of all, $CeO_2$ 20% - $Al_2O_3$, where the peak integrated intensity of the Ce (200) surface was larger than the peak integrated intensity of the Ce (111) surface from X-ray diffraction analysis by more than 0.6, was dispersed in water. In this dispersion fluid, dinitrodiamine platinum salt was introduced, and $NaBH_4$ for reducing Pt was further introduced, and then the fluid was agitated for two hours, dried for a day at 120 °C, and then baked for an hour at 400 °C in the air. The sample thus obtained was dispersed in water, and Ce acetate and A1 nitrate were introduced therein, and ammonia water was further introduced. Thereafter, the sample was agitated for two hours, dried for a day at 120 °C, and baked for an hour at 400 °C in the air, and the target sample was obtained.

(Embodiment example 4) Production of Pt 0.3%/$CeO_2$ 20% - $Al_2O_3$

In Embodiment example 4, preparation was done similarly to Embodiment example 1 except that Ce acetate was changed to Ce nitrate, and tetraammine platinum hydroxide was changed to dinitrodiamine platinum salt.

(Embodiment example 5) Preparation of Pt 0.3%/$CeO_2$ 20% - $Al_2O_3$

In Embodiment example 5, preparation was done similarly to Embodiment example 1 except that the amounts of Ce acetate and Al nitrate were increased.

(Embodiment example 6) Production of Pt 0.3%/$CeO_2$ 20% - $Al_2O_3$

In Embodiment example 6, preparation was done similarly to Embodiment example 1 except that the amounts of Ce acetate and Al nitrate were reduced.

(Embodiment example 7) Production of Pt 0.3%/$CeO_2$ 20% - $Al_2O_3$

In Embodiment example 7, preparation was done similarly to Embodiment example 1 except that the amounts of Ce acetate and Al nitrate were increased.

(Embodiment example 8) Production of Pt 0.3%/$CeO_2$ 20% - $ZrO_2$ - $Al_2O_3$

In Embodiment example 8, first of all, in alumina which was dispersed in water, Ce acetate and Zr acetate were introduced so that $CeO_2$ was 20 wt% and $ZrO_2$ was 7 wt% to alumina. Thereafter, the sample was agitated for two hours, and dried for a day at 120 °C. Thereafter, the sample was baked for two hours at 600 °C in the air. The sample obtained after baking was dispersed in water, and tetraammine platinum hydroxide was introduced therein. The sample was then agitated for two hours, dried for a day at 120 °C, and baked for an hour at 400 °C. The sample thus obtained was dispersed in water, and Ce acetate, Zr acetate and Al nitrate were introduced therein, and the sample was agitated for two hours, dried for a day at 120 °C, baked for an hour at 400 °C, and then the target sample was obtained.

(Embodiment example 9) Production of Pd 0.3%/ $Al_2O_3$ 20% - $CeO_2$

First of all, in ceria which was dispersed in water, Al nitrate was introduced so that $Al_2O_3$ was 20 wt% to ceria. Thereafter, the sample was agitated for two hours, dried for a day at 120 °C, and baked for two hours at 600 °C in the air. The sample obtained from baking was dispersed in water, and Pd nitrate was introduced therein. Then, the sample was agitated for two hours, dried for a day at 120 °C, and baked for an hour at 400 °C. The sample thus obtained from baking was dispersed in water, and Ce acetate and Al nitrate were introduced therein. The sample was then agitated for two hours, dried for a day at 120 °C, baked for an hour at 400 °C in the air, and thus the target sample was obtained.

(Embodiment example 10) Production of Ph 0.3%/Al$_2$O$_3$ 20% - ZrO$_2$

In zirconia which was dispersed in water, Al nitrate was introduced so that Al$_2$O$_3$ is 20 wt% to zirconia. Thereafter, the sample was agitated for two hours, dried for a day at 120 °C, and then baked for two hours at 600 °C in the air. The sample obtained form baking was dispersed in water, and Rh nitrate was introduced therein. Thereafter, the sample was agitated for two hours, dried for a day at 120 °C, and then baked for an hour at 400 °C in the air. The sample obtained from baking was dispersed in water, Zr acetate and Al nitrate were introduced, agitated for two hours, dried for a day at 120 °C, baked for an hour at 400 °C, and the target sample was obtained.

(Embodiment example 11) Production of Pt 0.3%/CeO$_2$ 20% - La$_2$O$_3$ 3% - Al$_2$O$_3$

In Embodiment example 11, preparation was done similarly to Embodiment example 8 except that Zr acetate was changed to La acetate.

(Embodiment example 12) Production of Pt 0.3%/CeO$_2$ 20% - Co$_2$O$_3$ 5% - Al$_2$O$_3$

In Embodiment example 12, preparation was done similarly to Embodiment example 8 except that Zr acetate was changed to Co nitrate.

(Embodiment example 13) Production of Pt 0.3%/CeO$_2$ 20% - MnO 5% - Al$_2$O$_3$

In Embodiment example 13, preparation was done similarly to Embodiment example 8 except that Zr acetate was changed to Mn nitrate.

(Embodiment example 14) Production of Pt 0.3%/CeO$_2$ 20% - Fe$_2$O$_3$ 5% - Al$_2$O$_3$

In Embodiment example 14, preparation was done similarly to Embodiment example 8 except that Zr acetate was changed to Fe nitrate.

(Embodiment example 15) Production of Pt 0.3%/CeO$_2$ 20% - MgO 2% - Al$_2$O$_3$

In Embodiment example 15, preparation was done similarly to Embodiment example 8 except that Zr acetate was changed to Mg acetate.

(Embodiment example 16) Production of Pt 0.3%/CeO$_2$ 20% - BaO 3% - Al$_2$O$_3$

In Embodiment example 16, preparation was done similarly to Embodiment example 8 except that Zr acetate was changed to Ba acetate.

(Embodiment example 17) Production of Pt 0.3%/CeO$_2$ 20% - TiO$_2$ 5% - Al$_2$O$_3$

In Embodiment example 17, preparation was done similarly to Embodiment example 8 except that Zr acetate was changed to titanyl ammonium oxalate.

(Embodiment example 18) Production of Pt 0.5%/CeO$_2$ 20% - Al$_2$O$_3$

In Embodiment example 18, preparation was done similarly to Embodiment example 2 except that the Pt supporting concentration was changed to 0.5%.

(Embodiment example 19) Production of Pt 1.0%/CeO$_2$ 20% - Al$_2$O$_3$

In Embodiment example 19, preparation was done similarly to Embodiment example 2 except that Pt supporting concentration was changed to 1.0%.

(Comparative example 1) Production of Pt 0.3%/$CeO_2$ 20% - $Al_2O_3$

In Comparative example 1, Pt was not covered with alumina which contained ceria. First of all, in alumina which was dispersed in water, Ce acetate was introduced so that $CeO_2$ was 20 wt% to alumina, and agitated for two hours. Thereafter, the sample was dried for a day at 120 °C, and baked for two hours at 600 °C in the air. The sample obtained from baking was dispersed in water, and tetraammine platinum hydroxide was introduced therein. Next, the sample was agitated for two hours, and the target sample was obtained.

(Comparative example 2) Production of Pt 0.3%/ $Al_2O_3$

In Comparative example 2, Pt was covered with alumina which did not contain Ce. First of all, tetraammine platinum hydroxide was introduced into alumina which is dispersed in water, agitated for two hours, dried for a day at 120 °C, and then baked for an hour at 400 °C in the air. The sample obtained from baking was dispersed in water, Al nitrate was introduced therein, agitated for two hours, and dried for a day at 120 °C. Thereafter, the sample was baked for an hour at 400 °C in the air, and the target sample was obtained.

(Comparative example 3) Production of Pt 3.0%/$CeO_2$ 20% - $Al_2O_3$

In Comparative example 3, preparation was done similarly to Embodiment example 2 except that the Pt supporting concentration was changed to 3.0%.
Here, each of the samples obtained from the aforementioned sample preparations underwent a catalyst durability test through three-hour baking at 900 °C in a gas atmosphere in which $H_2$ 2%/He balance and $O_2$ 5%/He balance were changed by 10 seconds. In addition, the particle sizes were measured by TEM before and after the durability test. Further, Pt coverage ratio was calculated from the aforementioned expressions. Regarding Embodiment example 1, Embodiment examples 5 to 7, and Comparative example 1, 50% of conversion rate was obtained.

<Measurement of Particle Sizes of Pt and Ce>

TEM-EDX measurements were supported out for the catalysts obtained from the aforementioned preparations and the catalysts after the baking. For TEM, Hf-2000 produced by Hitachi, Ltd. was used, and, the measurement was done with an accelerating voltage of 200 kv and the cutting condition was ambient temperature. For EDX, SIGMA manufactured by Kavex was used. The measurement method was that an embedding process was conducted to catalyst powder by epoxy resin, and after the epoxy resin was hardened, a super thin section was created from ultra microtome. By using this section, the dispersion state of each type of crystal particles was investigated by TEM. In the images obtained, the contrast (shadow) region were focused, the type of metal was specified, and the particle size of the metal was measured. Further, the samples obtained in Embodiment example 2 and Comparative example 1 were observed by using a high-angle annular dark field scanning transmission electron microscopy image (HAADF-STEM).

<Measurement of 50% Conversion rate Temperature>

From the model gas shown in Table 1, 50% conversion rate temperature (T50) was obtained when temperature was increased from room temperature to 400 °C at 10 °C/minute.

[Table 1]

| Composition of reactant gas | |
| --- | --- |
| Gas Composition | Stoichiometry |
| Z value (-) | 1.000 |
| A/F (-) | 14.5 |
| NO(ppm) | 1000 |
| CO(%) | 0.6 |
| $H_2$(%) | 0.2 |
| $O_2$(%) | 0.6 |
| $CO_2$(%) | 13.9 |
| HC(ppmC) | 1665 |
| $H_2O$(%) | 10 |

(continued)

| Composition of reactant gas | |
|---|---|
| Gas Composition | Stoichiometry |
| $N_2$(Balance) | rest |
| Gas flow rate: 40L/min. | |

<Measurement of Unit CO Adsorption Amount>

To obtain coverage ratio, a unit CO adsorption amount was measured. A metal dispersion rate measuring device BEL-METAL-3 produced by Bel Japan Inc. was used to measure a unit CO adsorption amount, and the measurement was supported out following the procedures below. The temperature of each sample was increased to 400 °C at 10 °C/minute in a He 100% gas flow, and then oxidization treatment was conducted for 15 minutes at 400 °C in an $O_2$ 100% gas flow. Next, the sample was purged for 5 minutes in He 100% gas, and a reducing treatment was conducted for 15 minutes at 400 °C in $H_2$ 40%/He balance gas flow. Next, the temperature was decreased to 50 °C in a He 100% gas flow. Then, CO 10%/He balance gas was entered in a pulsing fashion, and the measurement was obtained.

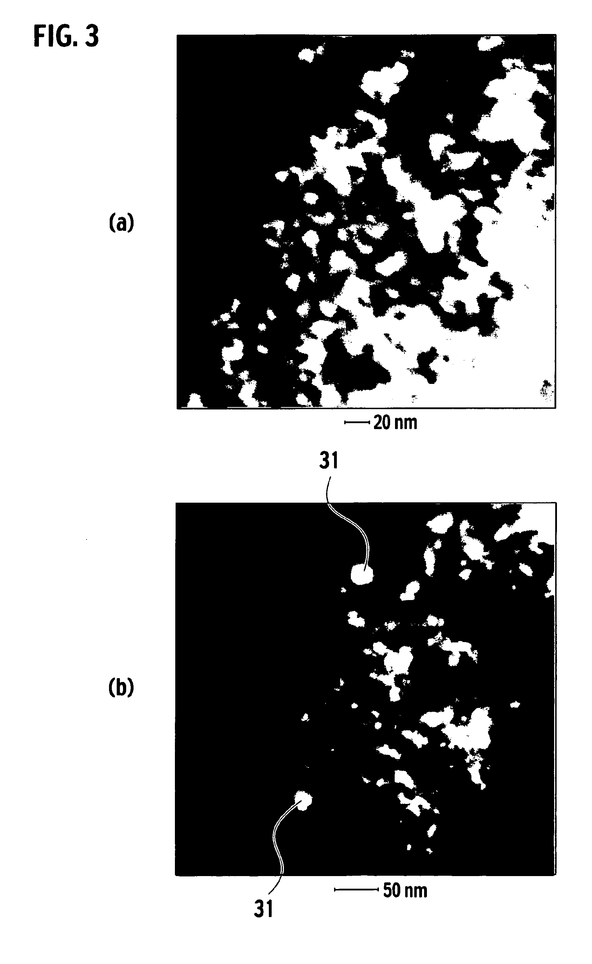

For aforementioned Embodiment example 1 to Embodiment example 7, Comparative example 1 and Comparative example 2, Pt particle sizes and Ce particle sizes during production of the catalysts, as well as Pt particle sizes and Ce particle sizes after the durability test were obtained. Table 2 shows each particle size and Pt coverage ratio. Also, FIG. 3(a) shows a HAAF-STEM image of the exhaust gas purifying catalyst obtained in Embodiment example 2 in an oxidizing atmosphere, and FIG. 3(b) shows a HAADF-STEM image representing a state of the exhaust gas purifying catalyst obtained in Comparative example 1 after the durability test.

[Table 2]

| | When catalyst was produced | | After durability test | | Pt coverage ratio (%) |
|---|---|---|---|---|---|
| | Pt particle size | Ce particle size | Pt particle size | Ce particle size | |
| Embodiment example 1 | 1.3nm | 5.0nm | 5.0nm | 8.0m | 52 |
| Embodiment example 2 | 1.3nm | 2.0nm | 3.0nm | 8.0nm | 54 |
| Embodiment example 3 | 2.2nm | 2.0nm | 3.0nm | 8.0nm | 52 |
| Embodiment example 4 | 1.4nm | 13.0nm | 38.0nm | 20.0nm | 52 |
| Comparative example 1 | 1.3nm | 5.0nm | 37.0nm | 8.0nm | 2 |
| Comparative example 2 | 1.3nm | - | 28.0nm | - | 54 |

Comparing Embodiment example 1 and Comparative example 1, in Comparative example 1 where the coverage ratio of Pt is 2%, since a speed of Pt being dissolved again after being released from the dissolved state into Ce-Al$_2$O$_4$ in a reducing atmosphere is slower than the sintering speed of Pt, sintering of Pt occurs when the atmosphere is changed to an oxidizing atmosphere. Therefore, a large difference was caused between Embodiment example 1 and Comparative example 1 in Pt particle size after the durability test. Comparing Embodiment example 1 and Comparative example 2, although the coverage ratio of Pt by alumina is 54% in Comparative example 2, since alumina which covers Pt does not contain $CeO_2$, Pt is not dissolved in alumina and continue to sinter in an oxidizing atmosphere. Hence, in Comparative example 2, the particle size after the durability test became large. From the results obtained in Embodiment example 1 to Embodiment example 4, it is considered that there were differences in Pt particle size because, with a large particle size of $CeO_2$ which is dispersed in alumina, an amount of Pt that is present thereon is increased, and sintering proceeds faster than dissolution. Further, as shown in FIG. 3(a), in the sample obtained Embodiment example 2, all areas which look white in the drawing were a Ce compound, and no Pt particles could be observed. As the resolution power of the device is 3 nm, it was considered that the particle size of Pt was 3 nm or smaller. Meanwhile, in FIG. 3(b), Pt 31 was clearly observed. The rest of the white areas were considered a Ce compound. As understood from FIGS. 3(a) and 3(b), the sample obtained from Comparative example 2 was considered dissolved in Ce-Al$_2$O$_4$ in an oxidizing atmosphere.

Next, Table 3 shows Pt particle sizes during production of catalysts, Pt particle sizes after the durability test, Pt coverage ratio, and 50% conversion rate temperature after the durability test for Embodiment example 1, Embodiment example 5 to Embodiment example 7, and Comparative example 1.

[Table 3]

| | Pt particle size when catalyst was produced | Pt particle size after durability test | Pt coverage (%) | 50% conversion temp after durability test(°C) | | |
|---|---|---|---|---|---|---|
| | | | | HC | CO | NO$_X$ |
| Embodiment example 1 | 1.3nm | 5.0nm | 52 | 271 | 262 | 263 |
| Embodiment example 5 | 1.3nm | 4.4nm | 76 | 276 | 268 | 268 |
| Embodiment example 6 | 1.3nm | 8.4nm | 15 | 267 | 254 | 253 |
| Embodiment example 7 | 1.3nm | 4.3nm | 87 | 283 | 274 | 273 |
| Comparative example 1 | 1.3nm | 37.0nm | 2 | 290 | 279 | 281 |

From the result stated in Table 3, it could be confirmed that, in Embodiment example 7 and Comparative example 1 where the coverage ratio was out of the range of 10 to 80%, 50% conversion rate temperature was high and the catalyst performance was reduced. In Embodiment example 7, although Pt sintering was suppressed as the coverage ratio was as high as 87%, 50% conversion rate temperature was considered high because contact with reactant gas was low. In addition, in Comparative example 1, it is considered that sintering of Pt could not be suppressed because coverage ratio was as low as 2%, the particle size of Pt after the durability test became large, and further, 50% conversion rate temperature was increased.

Next, Table 4 shows each constitutive element, particle sizes of precious metals during production of catalysts, particle sizes of the precious metals and coverage ratio of the precious metal after the durability test for Embodiment example 1, Embodiment example 8 to Embodiment example 17.

[Table 4]

| | Precious metal | Element | Oxide | Precious metal particle size when catalyst was produced | Precious metal particle size after durability test | Precious metal coverage ratio (%) |
|---|---|---|---|---|---|---|
| Embodiment example 1 | Pt | Ce | Al$_2$O$_3$ | 1.3nm | 5.0nm | 52 |
| Embodiment example 8 | Pt | Ce, Zr | Al$_2$O$_3$ | 1.3nm | 3.8nm | 53 |
| Embodiment example 9 | Pd | Al | CeO$_2$ | 1.2nm | 4.7nm | 59 |
| Embodiment example 10 | Rh | Al | ZrO$_2$ | 1.1nm | 4.5nm | 62 |
| Embodiment example 11 | Pt | Ce, La | Al$_2$O$_3$ | 1.4nm | 4.5nm | 53 |
| Embodiment example 12 | Pt | Ce, Co | Al$_2$O$_3$ | 1.4nm | 3.6nm | 51 |
| Embodiment example 13 | Pt | Ce, Mn | Al$_2$O$_3$ | 1.5nm | 3.7nm | 55 |

(continued)

|  | Precious metal | Element | Oxide | Precious metal particle size when catalyst was produced | Precious metal particle size after durability test | Precious metal coverage ratio (%) |
|---|---|---|---|---|---|---|
| Embodiment example 14 | Pt | Ce, Fe | $Al_2O_3$ | 1.4nm | 3.6nm | 52 |
| Embodiment example 15 | Pt | Ce, Mg | $Al_2O_3$ | 1.7nm | 5.2nm | 53 |
| Embodiment example 16 | Pt | Ce, Ba | $Al_2O_3$ | 1.7nm | 5.2nm | 53 |
| Embodiment example 17 | Pt | Ce, Ti | $Al_2O_3$ | 1.6nm | 5.8nm | 51 |

From the results shown in Table 4, comparing the values of Embodiment example 1, Embodiment example 8, and Embodiment example 11 to Embodiment example 17, in a case where an element other than Ce was contained in alumina, the particle size of Pt after the durability test was suppressed to about triple to quadruple of a size before the durability test compared to the case where only Ce was contained, and an effect by adding other metal was observed. In addition, where Pd or Rh was used as a precious metal, the particle size after the durability test could be kept small similarly to the case of Pt. Moreover, as shown in Embodiment example 8 and Embodiment example 11 to Embodiment example 17, it was found out that a similar level of effect could be obtained when any element of Zr, La, Co, Mn, Fe, Mg, Ba and Ti was used as other metal to be contained instead of Ce.

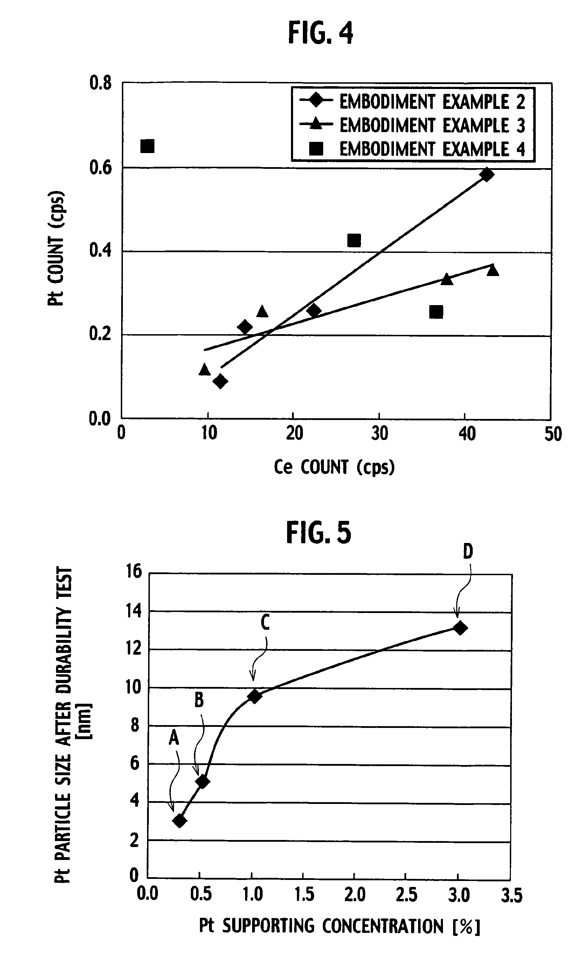

Next, regarding foregoing Embodiment example 2 to Embodiment example 4, Table 5 below shows the spectral integrated intensities of Pt (IA) obtained from EDX after 1-hour baking at 400 °C, the spectral integrated intensities of Ce (IB), IA/IB, and particle sizes of Pt after the durability test. Also, FIG. 4 shows a relation between Ce count (cps) and Pt count (cps) after the samples obtained in Embodiment example 2 to Embodiment example 4 were baked.

[Table 5]

|  |  | Count (cps) | | | | IA/IB | R^2 | Pt Particle size after durability test |
|---|---|---|---|---|---|---|---|---|
|  |  | Observation point - 1 | Observation point - 2 | Observation point - 3 | Observation point - 4 |  |  |  |
| Embodiment example 2 | LA | 0.26 | 0.09 | 0.59 | 0.22 | 0.015 | 0.96 | 2.0nm |
|  | IB | 22.4 | 11.5 | 42.4 | 14.3 |  |  |  |
| Embodiment example 3 | IA | 0.26 | 0.34 | 0.12 | 0.36 | 0.006 | 0.86 | 5.0nm |
|  | IB | 16.3 | 37.8 | 9.6 | 43.2 |  |  |  |
| Embodiment example 4 | IA | 0.16 | 0.26 | 0.43 | 0.65 |  | 0.25 | 0.0 |
|  | IB | 13.63 | 36.9 | 27 | 3 |  |  |  |

In Embodiment example 2 and Embodiment example 3, a good correlation was seen between Ce count and Pt count. In Embodiment example 2 and Embodiment example 3, the particle sizes of $CeO_2$ were small, and the amount of Pt present per particle of $CeO_2$ was small as shown in Table 2. Therefore, a sintering suppressive ability for Pt could be achieved. The sintering suppressive effect was obvious from the fact that the particle sizes of Pt after the durability test were small. Further, comparing Embodiment example 2 and Embodiment example 3, the IA/IB value for Embodiment example 2 was higher than Embodiment example 3. In this case, the amount of Pt selectively supported on $Ce-Al_2O_4$ was large, and the Pt sintering suppressive ability could be achieved. Compared to these results, no correlation was seen between Ce count and Pt count in Embodiment example 4. In Embodiment example 4, since the particle size of $CeO_2$ dispersed in alumina was large, and the amount of Pt which was present thereon increased, it was considered that Pt sintering proceeded faster than PT being dissolved in $Ce-Al_2O_4$, and, as a result of this, the Pt sintering suppressive effect could not be achieved, and the particle size of Pt after durability test became large.

Next, Table 6 shows the Pt support densities and particle sizes of Pt after the durability test for Embodiment example 18, Embodiment example 19, and Comparative example 4. Moreover, FIG. 5 shows a relation between a Pt supporting concentration and Pt particle size after the durability test.

[Table 6]

|  | Pt supporting concentration (%) | Pt particle size after durability test (nm) |
|---|---|---|
| Embodiment example 2 | 0.3 | 3 |
| Embodiment example 18 | 0.5 | 5.1 |
| Embodiment example 19 | 1.0 | 9.7 |
| Comparative example 3 | 3.0 | 13.6 |

A in FIG. 5 represents the Pt particle size in Embodiment example 2 where the Pt supporting concentration was 0.3%, B in FIG. 5 represents the Pt particle size in Embodiment example 18 where the Pt supporting concentration was 0.5%, C in FIG. 5 represents the Pt particle size in Embodiment example 19 where the Pt supporting concentration was 1.0%, and D in FIG. 5 represents the Pt particle size in Comparative example 3 where the Pt supporting concentration was 3.0%. From these results, it is understood that the lower the Pt supporting concentration is, the smaller the Pt particle size becomes after durability test.

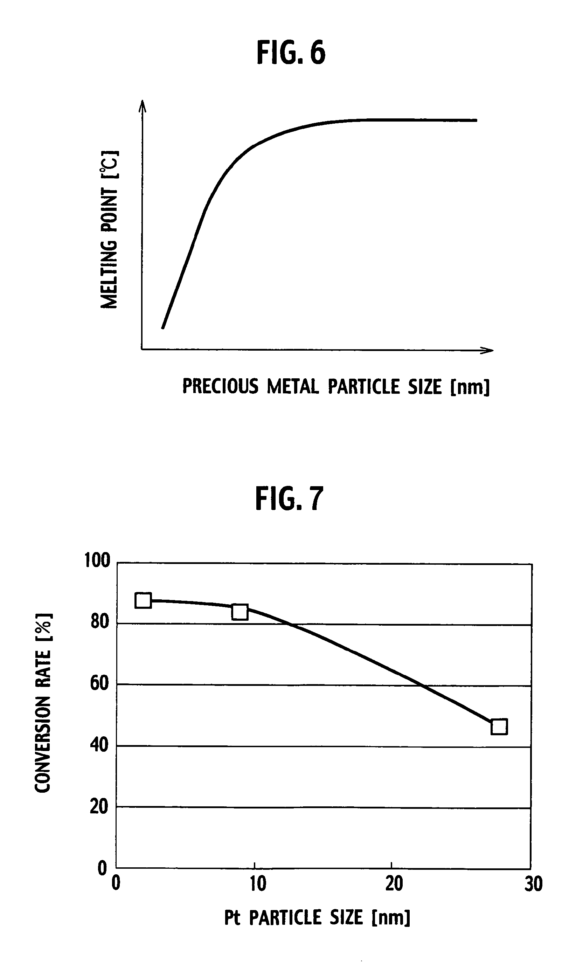

Note that, because the melting point of a precious metal fine particle suddenly decreases when the particle size thereof becomes 5 nm or smaller, the precious metal particles easily move closer to each other and sinter together when the particle size becomes 5nm or smaller. In particular, Pt sinters remarkably when heated, and, even when Pt is dispersed uniformly on a support, Pt sinters and the particle size thereof increases due to heating. Therefore, as shown in FIG. 7, when the particle size of Pt becomes small, a function of Pt as a catalyst, in other words, conversion rate which is an indicator for purification of $NO_x$ is lowered due to sintering of Pt caused by heating.

Hereinbefore, the present invention has been described in detail based on embodiments of the invention with specific Embodiment examples. However, the present invention is not limited to the descriptions above, and may be modified or changed without departing from the idea of the present invention.

The entire contents of Japanese Patent Application No. 2004-372185 (filed on December 22, 2004) and Japanese Patent Application No. 2005-21427 (January 28, 2005) are incorporated herein by reference.

INDUSTRIAL APPLICABILITY

Since the exhaust gas purifying catalyst of the present invention can suppress a reduction of a dispersion rate of a precious metal, maintain a state where the particle size of the precious metal is small, and has excellent heat durability with a small amount of the precious metal, the catalyst can be used as a three-way catalyst for an automobile, and the like.

**Claims**

1.  An exhaust gas purifying catalyst, comprising:

    a composite compound in which a metal selected from among Al, Ce, La, Zr, Co, Mn, Fe, Mg, Ba and Ti is uniformly dispersed on an oxide selected from among $Al_2O_3$, $ZrO_2$ and $CeO_2$; and
    a precious metal selected from among Pt, Pd and Rh, supported on a compound of the metal, and covered with the composite compound.

2.  The exhaust gas purifying catalyst as claimed in claim 1, wherein the compound of the metal is contained in the composite compound.

3.  The exhaust gas purifying catalyst as claimed in claim 1, wherein the precious metal is covered with the composite compound in a range of 10 to 80% of a surface area thereof.

4.  The exhaust gas purifying catalyst as claimed in claim 1, wherein the precious metal has a particle size of 10 nm or smaller.

5.  The exhaust gas purifying catalyst as claimed in claim 1, wherein the compound of the metal has a particle size of 10 nm or smaller.

6. The exhaust gas purifying catalyst as claimed in claim 1, wherein a particle size of the precious metal after three-hour baking at 900 °C in air is 10 nm or smaller.

7. The exhaust gas purifying catalyst as claimed in claim 1, wherein the precious metal is Pt, the metal is Ce, and the oxide is $Al_2O_3$.

8. The exhaust gas purifying catalyst as claimed in claim 7, wherein a ratio of a peak integrated intensity of Ce (200) surface to a peak integrated intensity of Ce (111) surface from X-ray diffraction analysis is larger than 0.6

9. The exhaust gas purifying catalyst as claimed in claim 7, wherein a ratio (IA/IB) between a spectral integrated intensity of Pt (IA) and a spectral integrated intensity of Ce (IB) obtained from energy dispersive X-ray analysis after 1-hour baking at 400 °C in air is 0.005 or larger.

10. The exhaust gas purifying catalyst as claimed in claim 7, wherein a supporting concentration of Pt is 1.0 wt% or smaller.

11. A method of producing an exhaust gas purifying catalyst, comprising:

preparing a dispersion system in which a second metal is uniformly dispersed in an oxide of a first metal;
depositing a precious metal selectively on the second metal by introducing precious metal salt into the dispersion system and by adding a reducing agent;
covering the precious metal deposited on the second metal with a mixture of salt of the first metal and salt of the second metal; and
baking the dispersion system in which the precious metal is covered with the mixture.

FIG. 1

# FIG. 2

(a)

11

14          6          14

13                              13

12

(b)

11

14          5          14

13                              13

12

(c)

11

14  x      5  y      14

13                              13

12

(d)

21

24          5

13                              13

12

**FIG. 3**

(a)

⊢——— 20 nm

31

(b)

31    ⊢——— 50 nm

## FIG. 4

## FIG. 5

# FIG. 6

MELTING POINT [°C]

PRECIOUS METAL PARTICLE SIZE [nm]

# FIG. 7

CONVERSION RATE [%]

Pt PARTICLE SIZE [nm]

## INTERNATIONAL SEARCH REPORT

| | International application No. |
|---|---|
| | PCT/JP2005/019992 |

| A. CLASSIFICATION OF SUBJECT MATTER |
|---|
| *B01J23/63*(2006.01), *B01D53/94*(2006.01), *B01J23/58*(2006.01), *B01J23/656* (2006.01), *B01J23/89*(2006.01), *B01J37/16*(2006.01) |
| According to International Patent Classification (IPC) or to both national classification and IPC |

| B. FIELDS SEARCHED |
|---|
| Minimum documentation searched (classification system followed by classification symbols) |
| *B01J23/63*(2006.01), *B01D53/94*(2006.01), *B01J23/58*(2006.01), *B01J23/656* (2006.01), *B01J23/89*(2006.01), *B01J37/16*(2006.01) |
| Documentation searched other than minimum documentation to the extent that such documents are included in the fields searched<br>Jitsuyo Shinan Koho 1922-1996 Jitsuyo Shinan Toroku Koho 1996-2006<br>Kokai Jitsuyo Shinan Koho 1971-2006 Toroku Jitsuyo Shinan Koho 1994-2006 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2003-311128 A (Toyota Motor Corp.),<br>05 November, 2003 (05.11.03),<br>Claims; Par. Nos. [0016] to [0037]; Fig. 2<br>(Family: none) | 1-4,6,7,10<br>5,8,9,11 |
| X<br>A | JP 2004-174490 A (Mazda Motor Corp.),<br>24 June, 2004 (24.06.04),<br>Claims; Par. Nos. [0034] to [0087]; Fig. 2<br>(Family: none) | 1-4,6<br>5,7-11 |
| X<br>A | JP 2000-15098 A (Japan Science and Technology Corp.),<br>18 January, 2000 (18.01.00),<br>Claims; Par. Nos. [0018] to [0051]; Fig. 1<br>(Family: none) | 1-4,10<br>5,6-9,11 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 February, 2006 (07.02.06) | Date of mailing of the international search report<br>14 February, 2006 (14.02.06) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

International application No.

PCT/JP2005/019992

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2003-80077 A  (Denso Corp.),<br>18 March, 2003 (18.03.03),<br>& US 2003/0004054 A1 | 1-11 |
| E,X | JP 2005-305300 A  (Toyota Motor Corp.),<br>04 November, 2005 (04.11.05),<br>Claims; Par. Nos. [0017] to [0037]; Fig. 1<br>(Family: none) | 1,3 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10216517 A
- JP 2004372185 A
- JP 2005021427 A

**Non-patent literature cited in the description**

- *J. Phys. Chem. B,* 2003, vol. 107, 2719-2724